# NEW EUROPEAN PATENT SPECIFICATION

(11) **EP 1 494 608 B2**
(45) Date of publication and mention of the opposition decision: **28.09.2011**
(45) Mention of the grant of the patent: 19.09.2007
(21) Application number: 03746915.2
(22) Date of filing: 13.02.2003
(51) Int. Cl.: A61C 7/12, A61C 5/06

(54) **CONTAINERS FOR PHOTOCURABLE MATERIALS**
BEHÄLTER FÜR LICHTHÄRTBARE MATERIALIEN
CONTENANTS POUR MATERIAUX PHOTODURCISSABLES

(30) Priority: 18.04.2002 US 126804
(43) Date of publication of application: 12.01.2005
(73) Proprietor: 3M Innovative Properties Company, St. Paul, MN 55133-3427 (US)
(72) Inventor: TZOU, Tsi-Zong,, Saint Paul, MN 55133-3427 (US); BRENNAN, Joan V.,, Saint Paul, MN 55133-3427 (US)
(74) Representative: Voortmans, Gilbert J.L.
(86) International application number: PCT/US2003/004430
(87) International publication number: WO 2003/088860

(56) References cited:
- EP-A- 0 388 086
- EP-A- 0 609 653
- EP-A2- 0 145 922
- EP-A2- 0 326 181
- JP-A- 2000 006 305
- US-A- 4 663 218
- US-A- 4 780 357
- US-A- 5 538 129
- US-A- 5 575 645
- US-A- 6 013 723
- US-A1- 2001 055 741
- Ullmann's encyclopedia of industrial chemistry Vol.A20, p.494/595(1992)
- MIYAGAWA, Y. et al; Dental Materials Journal 19(2):164-172,2000
- BEAUNEZ, P. et al; Journal of Polymer Science: Part A: Polymer Chemistry, Vol 32, 1471-1480 (1994)
- MISRA G.S. Prog. Polym. Sci., Vol.8, pp61 to 131, (1982)

## Description

### Background of the Invention

### 1. Field of the Invention

This invention relates to containers for materials that cure upon exposure to light. The invention is particularly useful for packaging, vials and dispensers for photocurable dental materials such as adhesives and sealants.

### 2. Description of the Related Art

A variety of materials are known that cure upon exposure to actinic radiation such as light in the visible or ultraviolet spectrum. These materials, also known as photocurable materials, are considered advantageous in that the curing reaction can be initiated when desired by controlling the radiation reaching the material. Photocurable materials are stored in containers that are opaque to the transmission of actinic radiation so that premature curing of the materials is avoided.

Typical examples of photocurable materials include certain dental adhesives and sealants. In the field of dentistry (including orthodontia, pedodontia, endodontia and other dental specialties) the photocurable material can be placed, for example, in the patient's oral cavity and then manipulated as needed by the practitioner. Once the practitioner is satisfied with the placement of the material, a curing light can be activated in order to harden the material and securely fix it in place.

Photocurable orthodontic adhesives are a particular advantage to orthodontic practitioners. In orthodontic treatment, tiny slotted appliances known as brackets are often secured by a quantity of photocurable material to the enamel surfaces of the patient's teeth. The use of a photocurable material enables the practitioner to shift the brackets to exact desired positions and orientations on the teeth before the adhesive has hardened.

Orthodontic brackets serve as a handle to control movement of malpositioned teeth to orthodontically correct positions. During treatment, an archwire is placed in the slots of the brackets and serves as a track to guide movement of the teeth to desired locations.

In many types of orthodontic treatment, the exact position of the bracket on the corresponding tooth is highly important in order to facilitate moving the teeth to desired positions without the need to place bends or twists in the archwire. As a consequence, the use of a photocurable orthodontic adhesive is highly beneficial in that the practitioner can take as much time as needed to position the brackets in precise, appropriate locations. Once the practitioner is satisfied with the bracket positions, the curing light can be activated to quickly harden the adhesive and secure the brackets in place.

For many years, orthodontic brackets were prepared for use by applying a small quantity of adhesive to the base of each bracket. Many practitioners used a small spatula to scoop adhesive from a container or mixing pad and then "butter" each bracket base with a portion of the adhesive of the spatula. Other practitioners used a syringe to dispense a small quantity of adhesive directly onto the base of each bracket.

In recent years, significant advances have occurred in the field of direct bonded dental articles. For example, U.S. Patent No. 5,015,180 describes in one embodiment an orthodontic bracket and a light curable paste sandwiched between the base of the bracket and a flexible, releasably adhering cover sheet. To bond the bracket to a tooth, the cover sheet is removed from the paste and the bracket base is then applied to the tooth. Such construction represents a time savings for the practitioner because the practitioner need not dispense and apply the adhesive paste to the bracket base before bonding the bracket to the tooth.

U.S. Patent No. 4,978,007 describes in one embodiment a substrate having a recess, an orthodontic bracket having an adhesive on an exterior surface, and a release coating sandwiched between the adhesive and the interior surface of the recess. This construction is an advantage because the adhesive is protected in the recess from light, oxygen, water vapor and contaminates. Also, the bracket may be retained in the recess in an upright manner. This upright position facilitates grasping of the sides of the bracket by a placement instrument or other tool when it is necessary to remove the bracket from the recess.

Other patents that describe adhesive precoated dental appliances include U.S. Patent Nos. 5,172,809, 5,328,363 and 5,538,129. U.S. Patent Nos. 5,354,199, and US 2001/0055 741 5,575,645 describe adhesives that are particularly useful for packaged orthodontic appliances.

Recently, there has been increased interest in broadening the state of the art relating to the adhesive used in adhesive precoated orthodontic appliances. For example, certain practitioners prefer adhesives with different handling characteristics than the adhesives in current popular use. Examples of handling characteristics include viscosity, flow, consistency and other rheological aspects.

In addition, there has been increased interest in the use of adhesives that change from a noticeable color to a lack of color when curing. Such adhesives, when uncured, are easily observed and thus facilitate clean-up of excess adhesive after the appliance has been positioned on the tooth surface. Once the adhesive has hardened, the color is substantially eliminated, rendering the adhesive more difficult to see and therefore more aesthetic during the course of treatment.

Unfortunately, many of the packages in current use for adhesive precoated orthodontic appliances are not entirely satisfactory for use with some of the new adhesives under consideration as mentioned above. In particular, it has been found that bond strength of the resultant bonded appliance substantially decreases in instances where the appliance and certain adhesives remain in the package for a significant length of time before use. As a result, the useful shelf life of the packaged appliance is adversely affected.

Unfortunately, an undue decrease in bond strength of orthodontic appliances to tooth enamel is undesirable because of the increased risk that the appliance may spontaneously debond and release from the tooth surface during the course of treatment. In such a circumstance, the patient must return to the orthodontist's office to receive a new appliance before complete treatment is resumed. As can be appreciated, spontaneous debonding of orthodontic appliances is a nuisance to both the practitioner and to the patient that is best avoided if at all possible.

### Summary of the Invention

The present invention relates to improved containers for photocurable materials that provide excellent protection against degradation of the photocurable materials, even after extended periods of time. The containers of the present invention are particularly useful for protecting dyes that impart a color changing feature to dental adhesives and sealants. The containers of the present invention effectively block the passage of actinic radiation over a broad spectral range and as a result the photocurable material does not prematurely lose color during storage.

The containers of the present invention comprise a polymer and metallic particles. As an example, the containers may be made of polypropylene that is compounded with aluminum filler. The combination of polymer and metallic particles provides a highly effective block to the passage of actinic radiation to color changing dyes, even though such dyes are known to be highly sensitive to light.

The containers of the present invention also exhibit good vapor barrier properties. As a result, the rheological characteristics of the photocurable material are less likely to change over extended periods of time. For example, the improved vapor barrier properties of the containers provide substantial protection against degradation of the handling characteristics of orthodontic adhesives so that the adhesive does not prematurely cure or dry or become otherwise unsatisfactory.

In more detail, one aspect of the present invention is directed toward a packaged article according to claim 1.

Another aspect of the invention is also directed to a packaged article according to claim 9.

Further details of the invention are defined in the features of the claims.

### Brief Description of the Drawings

Fig. 1 is a fragmentary, side cross-sectional view of a packaged article according to one embodiment of the present invention;
Fig. 2 is side view in partial cross-section of a packaged article according to another embodiment of the invention;
Fig. 3 is an enlarged side cross-sectional view of a packaged article according to still another embodiment of the invention;
Figs. 4-6 are graphs of luminous transmission at various wavelengths through walls of certain containers constructed according to the invention;
Fig. 7 is a graph showing the color stability of certain photocurable adhesives when stored in certain containers constructed in accordance with the invention; and
Fig. 8 is a graph showing the loss of CPQ in a particular photocurable adhesive when stored in a container of the present invention, in comparison to the loss of CPQ from another adhesive when stored in a container that is not constructed according to the invention.

### Detailed Description of the Preferred Embodiments

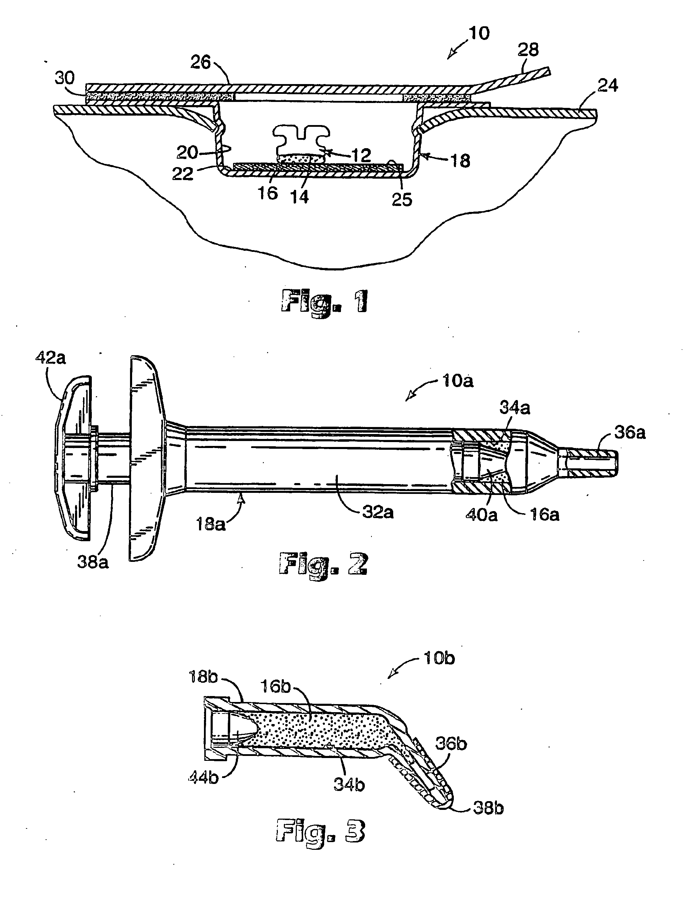

An orthodontic article according to one embodiment of the invention is illustrated in Fig. 1 and is broadly designated by the numeral 10. The article 10 includes an orthodontic appliance such as a bracket 12. The bracket 12 has a base 14 for directly bonding the bracket 12 to a patient's tooth structure. Preferably, the base 14 has a slightly concave shape with a compound contour to precisely match the convex, compound contour of an external tooth surface, although other shapes are also possible.

The bracket 12 may be made of any one of a variety of materials, including metals (such as stainless steel), plastic (such as polycarbonate) or ceramic (such as monocrystalline or polycrystalline alumina). If made of plastic or ceramic, the bracket 12 is preferably transparent or translucent such that the color of the patient's tooth is visible through the bracket 12.

However, other types of appliances may be used with the article 10 in substitution for the bracket 12. For example, the appliance may be an orthodontic buccal tube that is adapted to be secured to one of the patient's molar teeth. As other alternatives, the appliance may be a button, a cleat, a lingual sheath or any other device adapted to be bonded by adhesive directly to the patient's tooth structure.

An orthodontic adhesive 16 extends across the base 14 of the bracket 12. The adhesive 16 has sufficient strength when hardened to secure and retain the bracket 12 on the patient's tooth structure during the typical course of an orthodontic treatment program. Preferably, the shape of the adhesive 16 resembles a pillow with four edge sections that are in approximate alignment with the four edge sections of the base 14. The adhesive 16 is also present in sufficient quantity to ensure that all of the space between the base 14 and the patient's tooth structure is filled with adhesive 16 once the base 14 has been forcibly placed onto the tooth structure and the adhesive 16 has hardened.

The adhesive 16 may be any one of a number of commercially available orthodontic adhesives that are useful for direct bonding and that cure upon exposure to actinic radiation such as light in the visible spectrum. Suitable adhesives, include, for example, "Transbond XT" brand adhesive from 3M Unitek and "Light Bond" brand adhesive from Reliance. Additional suitable adhesives are described in applicant's copending U.S. patent application Serial No. 10/126505, entitled "Orthodontic Appliances and Adhesives including an Adhesive on the Base of the Appliance" and filed on April 18, 2002.

Preferably, the adhesive 16 includes one or more dyes that change color as the adhesive hardens. For example, the dyes may be selected to impart a color to the adhesive during the time that the adhesive is substantially uncured so that the adhesive may be visually spotted and removed from locations where it is not desired. In general, removal and clean-up of the adhesive is easier when undertaken at a time before the adhesive has hardened.

The dye preferably bleaches and causes the adhesive to lose its color during curing so that the adhesive is essentially colorless once hardened. The lack of color renders the cured adhesive more difficult to see and consequently provides a more aesthetic appearance in the oral cavity. This lack of color is especially beneficial when the appliance is translucent or transparent and when the color of the patient's tooth is visible through the bracket 12.

Examples of suitable dyes include Rose Bengal, Methylene Violet, Methylene Blue, Fluorescein, Eosin Yellow, Eosin Y, Ethyl Eosin, Eosin bluish, Eosin B, Erythrosin B, Erythrosin Yellowish Blend, Toluidine Blue, 4',5'-Dibromofluorescein, and combinations thereof. Additional details regarding the dyes are set out in the pending U.S. patent application described above entitled "Orthodontic Appliances and Adhesives including an Adhesive on the Base of the Appliance".

The bracket 12 and the adhesive 16 are partially surrounded by a container 18. The exemplary container 18 illustrated in Fig. 1 includes an integrally-molded body with internal wall portions that define a recess or well 20. The well 20 includes side Walls and a bottom 22.

Optionally, the well 20 has an oval shape in plan view. As an additional option, the side walls of the well 20 include horizontally extending recesses for engagement with edge structure of a carrier 24. Additional information regarding a suitable carrier 24 is set out in U.S. Patent No. 5,328,363.

Preferably, the bottom 22 of the well 20 includes a release substrate having an upper surface with cells, particles, protruding pins, projections or other structure that provides a number of pores at least in areas in contact with the adhesive 16. The pores may be separated and spaced from each other in non-communicating relation. Alternatively, the pores may be in communication with each other, either in a reference plane extending along the outermost portion of the upper surface, or in one or more reference planes extending below such upper surface, or in any combination of such planes.

Preferably, a majority of the volume of the pores does not contain adhesive. More preferably, the pores are substantially free of the adhesive 16. Preferably, less than about 50% of the adhesive by weight is within the pores, and more preferably less than about 75% of the adhesive by weight is within the pores. Most preferably, less than about 90% of the adhesive by weight is within the pores. Preferably, at least 50% of the volume of the pores is free of adhesive, and more preferably at least 75% of the volume of the pores is free of adhesive. Most preferably, at least 90% of the volume of the pores is free of adhesive. Such construction facilitates release of the adhesive 16 from the bottom 22.

The release substrate may be made of any one of a number of materials. In the embodiment illustrated in Fig. 1, the release substrate comprises a polymeric foam 25 having either an open cellular structure or a closed cellular structure. A closed cell foam is preferred. The foam 25 is preferably compressible and resilient.

Preferably, the pores of the release substrate have a diameter that is mostly, if not entirely, within the range of about 0.001 in. (0.02 mm) to about 0.01 in. (0.2 mm). The pore size is ascertained by determining its diameter in a reference plane parallel to the plane of the upper surface of the release substrate or foam 25. If the pore does not present a circular shape in that reference plane, the pore size is determined by calculating the diameter of a circle presenting an area that is equal to the area of that pore in the same reference plane.

Particularly preferred materials for the foam 25 include polyolefin foams such as polyethylene foams, polybutylene foams and polypropylene foams, or blends of the foregoing. Polyvinyl chloride foams, polyurethane foams and foam copolymers may also be employed. Examples of suitable foams include Minicel brand foams (such as series M200, M300 and T300) from Voltek. Optionally, an outer layer of cells of the foam may be heated to "seal" or shrink the size of the pores by reducing the pore diameter and/or by reducing the pore depth in directions perpendicular to the plane of its exterior, upper surface.

Additional information regarding the release substrate can be found in U.S. Patent No. 6,183,249. Optionally, and as described in that reference, the release substrate may be integral with the bottom 22. In that instance, the pores may be made using a microreplication technique such as the methods disclosed in U.S. Patent Nos. 5,152,917 and 5,500,273.

The container 18 including the well 20 with the bottom 22 is made of a material that comprises a polymer and metallic particle. Examples of suitable polymers include polypropylene, polypropylene copolymer, polyethylene, polyethylene copolymer, cycloolefin-copolymer, acrylonitrile-based copolymer, polyvinyl chloride, polyvinylidene chloride and polyamide. Blends and laminates of those polymers are also possible.

Suitable metallic particles include aluminum, copper, steel, gold, silver, nickel, brass, iron, zinc and alloys of the foregoing.. The particles may have a variety of shapes including flakes, powders, fibers, spheres, rods and combinations of the foregoing. Optionally, the particles are metallized particles having an inorganic core, such as glass bubbles, glass fibers or glass spheres. Metallized particles having an organic core are also possible.

Preferably, the metallic powder has a size in the range of about 0.01 micron to about 50 microns, and more preferably in the range of about 1 micron to about 30 microns. An example of suitable metallic particles is aluminum flakes having an average diameter of 15 microns.

Preferably, the ratio of polymer to metallic powder in the mixture is about 0.1% to about 40% by weight, and more preferably in the range of about 1% to about 25% by weight.

Optionally, the metallic particles are mixed with the polymer and the resulting mixture is then molded into the shape of the container 18 shown in Fig. 1. As another option, the metallic particles and polymer may be mixed together and then extruded or molded into the shape of a sheet which is subsequently formed into the shape of the container 18 shown in Fig. 1. The sheet material may be formed to the desired shape by any suitable forming operation such as vacuum-forming. Other suitable manufacturing methods are described in U.S. Patent No. 5,738,816.

Preferably, the material of the container 18 is substantially opaque to the transmission of light in the range of about 400 nanometers to about 600 nanometers. This range is satisfactory for blocking passage of light that might otherwise be absorbed by the light sensitive dyes mentioned above. However, broader ranges are also possible and may be desired when the adhesive 16 contains components that are sensitive to radiation outside of the range identified above.

Preferably, the material of the container 18 is compatible with a variety of compounds used in photocurable compositions including the photocurable orthodontic adhesives set out above. For example, the polymer preferably does not adsorb or absorb the CPQ or resin components of the adhesive to any significant degree. As a result, the adhesive remains "fresh" and has a relatively long shelf life until such time as the container is opened.

Advantageously, the metallic particles impart an aesthetic appearance to the container 18 by providing a shiny, metallic-looking quality. Optionally, other colorants can be added to give variations in the hue, tint or shade. For example, titanium dioxide and ultramarine blue colorants can be added as desired to provide a metallic blue appearance. In addition, the metallic particles impart an antistatic property to the container 18.

The article 10 also includes a cover 26 that is connected to the container 18. In Fig. 1, the cover 26 is shown in a closed configuration. The cover 26 may be opened by grasping a tab 28 of the cover 26 and pulling the same away from the container 18, preferably in a swinging, hinge-like manner so that a portion of the cover 26 remote from the tab 28 remains secured to the flange of the container 18.

The cover 26 may be made of any material that is substantially opaque to the transmission of actinic radiation so that the adhesive 16 does not prematurely cure. Examples of suitable materials for the cover 26 include laminates of aluminum foil and polymers. For example, the laminate may comprise a layer of polyethyleneterephthalate, adhesive, aluminum foil, adhesive and oriented polypropylene.

The cover 26 is releasably connected to the flange of the container 18 by heat seal that extends along the flange and surrounds the upper opening of the well 20. In the lidding identified above, the heat seal is established by a heated platen that softens the polypropylene for bonding the lidding to the flange of the container 18. Alternatively, a layer of adhesive (such as the adhesive 30) could be provided.

As yet another option, the article 10 may be constructed by omitting the bracket 12 and providing only the container 18 and the adhesive 14. In such a construction, the adhesive 14 is preferably a "single-dose" of adhesive of a quantity that is suitable for use with a single orthodontic appliance such as a bracket. The well of the container may contain one single dose or a number of single-dose quantities that are spaced apart from each other.

A packaged article 10a in accordance with another embodiment of the invention is illustrated in Fig. 2. In this example, the article 10a is a syringe that comprises a container 18a. The container 18a includes an elongated cylindrical housing 32a with inner walls that define a chamber 34a.

The housing 32a includes a forward nozzle 36a having a slightly tapered, frustroconical external surface. The nozzle 36a includes a passage that extends from the chamber 34a to a discharge opening that is located on the front end of the nozzle 36a.

The syringe also includes a plunger 38a that is slidable within the housing 32a. The plunger 38a includes a front piston 40a that slidably engages the cylindrical inner walls of the chamber 34a. The plunger 38a also includes a rear, somewhat "T"-shaped handle 42a for facilitating advancement of the plunger 38a.

A quantity of a photocurable material 16a is received in the chamber 34a. The photocurable material 16a may be the same as the orthodontic adhesive described above. Alternatively, the photocurable material 16a may be another type of material such as a bonding agent used in other branches of dentistry or a bonding agent used in non-dental applications such as medical, household and industrial applications.

Although not shown in the drawings, the article 10a preferably initially includes a cap that is releasably connected to the nozzle 36a for protecting the photocurable material 16a until needed for use. As an additional option, the article 10a may include a dispensing tip that is adapted for detachable coupling to the nozzle 36a after the cap, if any, has been removed. An example of a suitable dispensing tip is described in U.S. Patent No. 6,238,212.

The container 18a including the housing 32a is made of a material that comprises a polymer and metallic particles, such as the materials described above in connection with the container 18. Optionally, all of the components of the article 10a (such as the plunger 38a) are made of the same material to provide a uniform appearance. Such construction ensures that the passage of actinic radiation to the photocurable material 16a in the chamber 34a is substantially blocked without adversely affecting the characteristics (such as the bond strength) of the same.

An article 10b according to another embodiment of the invention is illustrated in Fig. 3. In this embodiment, the article 10b is a capsule or cartridge that includes a container 18b having a chamber 34b. The article 10b also includes a piston 44b that is movable in the chamber 34b.

The container 18b includes a front nozzle 36b with an outlet opening. The outlet opening is in communication with the chamber 34b. Optionally, and as shown in the drawings, a cap 38b is slidably received on the nozzle 36b and is removed when desired for a dispensing operation.

A quantity of photocurable material 16b is received in the chamber 34b. Examples of suitable photocurable materials 16b include the photocurable materials mentioned above.

In use, the article 10b is placed in a hand-held applicator, such as those applicators that are well known in the dental field. An example of a suitable applicator is no. 5706SD from 3M Company. A suitable applicator is described and illustrated in U.S. Patent No. 6,095,814.

During a dispensing operation, a lever of the applicator is moved to advance a plunger that bears against the rear end of the piston 44b. Continued advancement of the lever moves the piston 44b forwardly in a direction toward the nozzle 36b. This movement exerts a pressure on the photocurable material 16b that is sufficient to direct the material 16b through the outlet opening of the nozzle 36b and toward its intended application site.

The container 18b is made of a material that comprises a polymer and metallic particles, such as the materials described above in connection with the containers 18 and 18a. As a result, the photocurable material 16b can be safely stored for extended periods of time within the chamber 34b without undue hardening or substantial degradation of properties.

The containers described above are representative of suitable constructions that are possible in accordance with the principles of the present invention. A number of other constructions are also possible, including containers that are similar to those known in the art. The containers described above are provided only as examples, and skilled artisans will be able to design and construct a variety of other types of containers suitable for particular needs.

### Examples

Sample articles were constructed according to the exemplary article 10 shown in Fig. 1. Three types of containers made of a mixture of polymer and metallic particles were injection molded. The wall thickness at the bottom of the container was 0.05 in. (1.3mm) and was 0.035 in. (0.9mm) in areas of the flange and the sidewall surrounding the well. The compositions of the three types of containers are set out in Table I.

**Table I**

| | Container "A" 1.6% powder | Container "B" 3.0% powder | Container "C" 5.6% powder |
|---|---|---|---|
| Sodium Aluminosulphosilicate (ultramarine blue) | 0.08 | 0.16 | 0.30 |
| Aluminum Powder | 0.42 | 0.82 | 1.52 |
| Mica/Titanium Dioxide | 1.06 | 2.04 | 3.80 |
| Salt of Stearic Acid (zinc salt) | 0.21 | 0.41 | 0.76 |
| Polypropylene | 98.22 | 96.57 | 93.62 |

A section of foam material was placed in the bottom of each well of each container. The foam was made from sections that were cut from Minicel brand foam no. M200, 0.030 inch(0.76 mm) thick.

An adhesive precoated orthodontic bracket was placed in each container. The brackets were twin metal brackets with a mesh base (no. 017-401, "Victory Series" brand miniature twin brackets, upper left central, with mesh base, from 3M Unitek Corporation). Each of the brackets was precoated with a photocurable orthodontic adhesive having one of the compositions set out in Table II.

**Table II**

| | Adhesive "L" | Adhesive "M" | Adhesive "N" |
|---|---|---|---|
| CPQ | 0.038 | 0.043 | 0.065 |
| BHT | 0.094 | 0.107 | 0.027 |
| EDMAB | 0.234 | 0.269 | 0.264 |
| DPI | 0.141 | 0.161 | 0.042 |
| EYB | 0.0038 | 0.0043 | 0.011 |
| BisGMA | 1.07 | 1.22 | 7.29 |
| PEG400DMA | 9.64 | 11.06 | 8.86 |
| CDMA | 7.53 | 8.62 | 4.43 |
| Filler 1 | 40.0 | 38.6 | 39.0 |
| Filler 2 | 40.0 | 38.6 | 39.0 |
| Filler 3 | 1.30 | 1.26 | 0.99 |

### GLOSSARY

BisGMA: bisphenol A diglycidal methacrylate
BHT: butylated hydroxytoluene
CDMA: Citrate dimethacrylate
CPQ: camphorquinone
DPI: diphenyliodonium hexafluorophosphate
EDMAB: ethyl-4-dimethylaminobenzoate
EYB: Erythrosin Yellowish Blend, made of 90% Erythrosin B and 10% Eosin Y
PEG40ODMA: polyethylene glycol dimethacrylate
PP: polypropyleneFiller 1: silane-treated quartz/Aerosil filler
Filler 2: silane-treated Dental Glass G018-117 (from Schott Glas)
Filler 3: Cabosil TS-720 (from Cabot Corporation)

For purposes of comparison, a number of containers were also molded and identified as control containers. These containers consisted of 99% polypropylene and 1% carbon black. The carbon black was "Omnicolor" brand pigment, no. UN0055, from Clariant, Masterbatches Division, of Muttenz, Switzerland.

The total luminous transmission of light in the ultraviolet and visible spectrum was measured through the side walls of empty containers "A", "B" and "C" as identified above. Light transmission was determined according to ASTM methods E903 and E891, using a Perkin-Elmer Lambda 19 Spectrophotometer fitted with a RSA-PE-19A integrating sphere accessory.

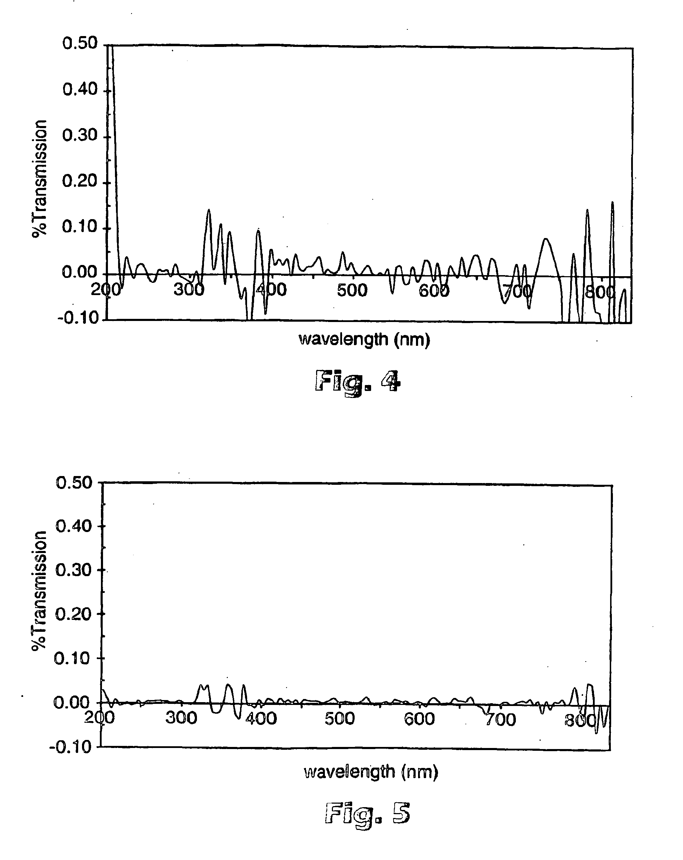

The percent transmission over a range of wavelengths in nanometers is shown in Figs. 4, 5 and 6 for containers "A", "B" and "C" respectively. The data set out in Figs. 4-6 show that the luminous transmission in various wavelengths for containers "B" and "C" was significantly less than the luminous transmission in the same wavelengths through container "A".

### Example I

A number of the orthodontic brackets identified above were coated with a layer of adhesive according to the formulation identified as Adhesive "L" or Adhesive "M" in Table II. The brackets and the adhesive were then placed in each of the three containers identified in Table I. A lidding material was placed over the well of each container to serve as a cover. The lidding was made of a laminate that included a layer of polyester film (12 micron thickness), a layer of adhesive, a layer of aluminum foil (25 micron thickness) and an acrylic-based heat seal coating. The containers were then subjected to continuous fluorescent light (30 watts) at a distance of 18 inches (46 cm).

For comparison purposes, a number of the "A" containers with the same lidding, brackets and adhesive as mentioned above were kept in dark storage.

To determine the photostability of the adhesive, the red color of the adhesive was measured using a spectrometer (no. EPP2000C, from StellarNet, Inc.) before and after subjecting the containers with the adhesive to the fluorescent light. The spectrometer was fitted with a fiber optic reflectance probe (R400-7-visNIR), a Toshiba photodiode array, a 25 micron slit and a miniature 5 watt fiber optic vis/NIR light source.

The procedure was carried out in darkroom conditions so that ambient light did not prematurely fade the samples. A dark scan was taken by covering the probe tip with the non-adhesive side of a section of black electrical tape to set up a background value. The fiber optic probe was positioned one-quarter inch (0.6 cm) away from the surface of a white Halon reflectance standard (RS50). The probe was adjusted so that the axis of the probe was approximately 45 degrees with respect to the surface of the standard. After switching the light source on and adjusting the integration time so that the curve covered 90% of the scale, a reference spectrum was saved.

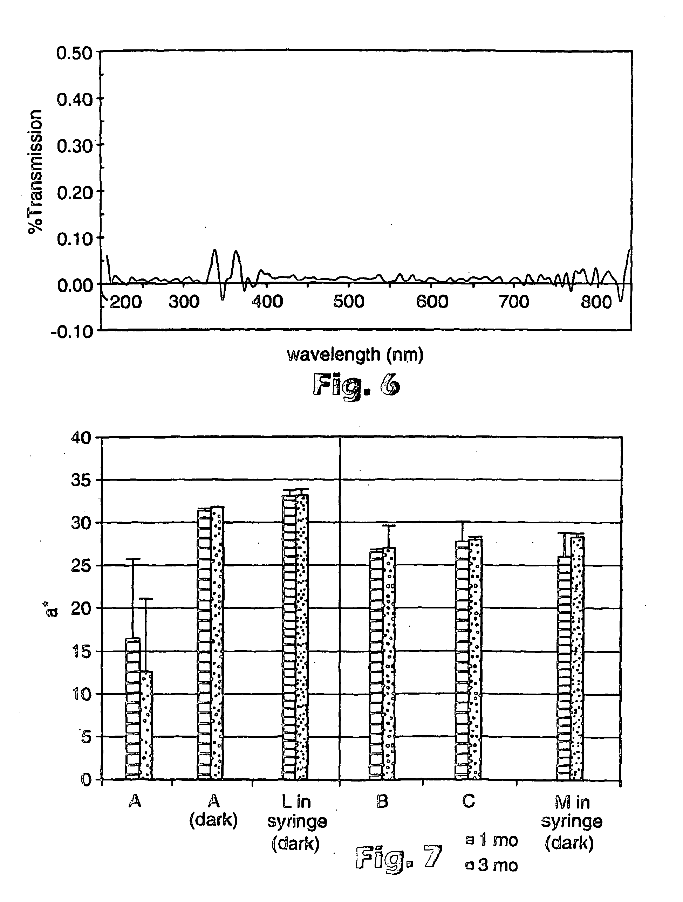

The adhesive was pressed into the form of a disk between two sheets of release liner (Scotchpak^{™} 1022, from 3M Company) using steel shims to set the thickness at 0.01 inch (0.25 mm). With the fiber optic source turned off, the disk was placed on the white reflectance standard while still contained between the two sheets of release liner. The light source was then activated and the spectrometer was used to capture the reflectance spectrum and convert it to L*, a* and b* values. The red color of the adhesive is represented as a*.The results of the experiment are set out in Fig. 7.

The data in Fig. 7 show that containers "B" and "C" provided excellent color protection for the adhesive and that the red color (a*) did not greatly vary from the red color of the adhesive kept in the container that was retained in a dark environment. However, container "A" provided significantly less protection of the red color over a one month period, and results after three months showed a further significant decrease in protection.

### Example II

A number of the orthodontic brackets mentioned above were coated with a layer of adhesive "L" as identified in Table II. Those brackets with the adhesive were then placed in containers "A" identified in Table I. A lidding material was placed over the well of each container to serve as a cover. The lidding comprised a laminate that included a layer of oriented polyamide (25 micron thickness), a layer of adhesive, a layer of aluminum foil (60 micron thickness), a layer of adhesive, a layer of polyethyleneterephthalate (12 micron thickness), a primer and a modified polypropylene heat seal coating. Those containers were then stored in a dark oven at 40°C.

A quantity of adhesive "N" from Table II was separated into sections approximately equal in size to the size of the adhesive on the base of the brackets in the preceding paragraph. Those sections of adhesive were then placed in the polypropylene control containers with 1% carbon black as described above.

A lidding material was placed over the well of each container to serve as a cover. The lidding comprised a laminate that included a layer of polyethyleneterephthalate (12 micron thickness), a layer of aluminum foil (20 micron thickness) and a polypropylene heat seal coating. The containers were also stored in a dark oven at 40°C.

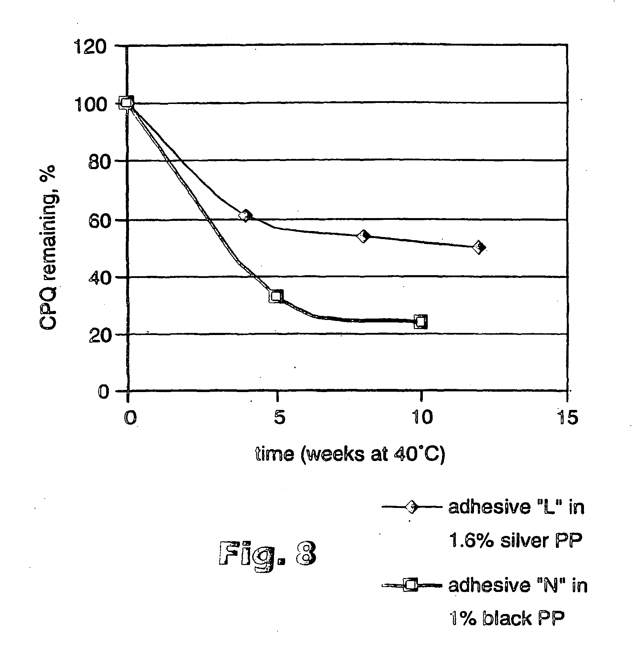

Fig. 8 is a graph showing the remaining percentage of CPQ in the adhesive over a period of time. The data in Fig. 8 show that the loss of CPQ is significant in the polypropylene control containers containing 1% carbon black. Although the amount of CPQ also declined in the adhesive stored in containers "A", the loss was not as substantial.

Significant premature loss of CPQ can lead to reduced bond strength and increase the risk of bond failure. As such, the containers "A" are more satisfactory than the control containers for storage of dental compositions including orthodontic adhesives.

## Claims

1. A packaged article (10a,b) comprising:
a quantity of photocurable material (16a,b) ; and
a container (18a,b) least partially surrounding the photocurable material (16a,b) the container (18a,b) comprising a polymer and metallic particles, wherein the particles are dispersed in the polymer, and wherein the container is a syringe, a capsule, a cartridge or a body having a recess.

2. A packaged article (10) comprising:
an orthodontic appliance (12) having a base (14);
a quantity of photocurable dental adhesive (16) received on the base (14) of the appliance (12); and
a container (18) at least partially surrounding the photocurable adhesive (16) the container (18) comprising a polymer and metallic particles, wherein the particles are dispersed in the polymer,
wherein the container comprises a body having a recess, and wherein the packaged article includes a cover that is connected to the container and is movable between an open and a closed position.

## Patentansprüche

1. Verpackter Gegenstand (10a, b) mit:
einer Menge an lichthärtbarem Material (16a, b); und
einem Behälter (18a, b), der das lichthärtbare Material (16a, b) mindestens teilweise umgibt; wobei der Behälter (18a, b) ein Polymer und Metallteilchen aufweist, wobei die Teilchen in dem Polymer dispergiert sind und wobei der Behälter eine Spritze, eine Kapsel, eine Patrone oder ein Körper mit einer Aussparung ist.

2. Verpackter Gegenstand (10) mit:
einer kieferorthopädischen Vorrichtung (12), die eine Basis (14) aufweist;
einer Menge an lichthärtbarem Zahnklebstoff (16), der auf der Basis (14) der Vorrichtung (12) aufgenommen ist; und
einem Behälter (18), der den lichthärtbaren Klebstoff (16) mindestens teilweise umgibt, wobei der Behälter (18) ein Polymer und Metallteilchen aufweist, wobei die Teilchen in dem Polymer dispergiert sind, wobei der Behälter einen Körper mit einer Aussparung aufweist und wobei der verpackte Gegenstand eine Abdeckung enthält, die mit dem Behälter verbunden ist und zwischen einer offenen und einer geschlossenen Position bewegt werden kann.

## Revendications

1. Objet (10a, b) sous emballage, comprenant :
une quantité de matériau (16a, b) photodurcissable et
un récipient (18a, b) qui entoure au moins partiellement le matériau (16a, b) photodurcissable, le récipient (18a, b) comprenant un polymère et des particules métalliques, les particules métalliques étant dispersées dans le polymère, et dans lequel le récipient est une seringue, une gélule, une cartouche ou un corps présentant un creux.

2. Objet (10) sous emballage, qui comprend :
un appareil orthodontique (12) présentant une base (14),
une quantité d'adhésif dentaire photodurcissable (16) placée sur la base (14) de l'appareil (12) et
un récipient (18) entourant au moins partiellement l'adhésif photodurcissable (16), le récipient (18) comprenant un polymère et des particules métalliques, les particules étant dispersées dans le polymère, dans lequel le récipient comprend un corps qui présente un creux, et dans lequel l'objet sous emballage comprend un couvercle qui est relié au récipient et qui peut être déplacé entre une position ouverte et une position fermée.
